# EUROPÄISCHE PATENTSCHRIFT

(11) **EP 2 753 515 B1**
(45) Veröffentlichungstag und Bekanntmachung des Hinweises auf die Patenterteilung: **14.11.2018**
(21) Anmeldenummer: 12759088.3
(22) Anmeldetag: 07.09.2012
(51) Int. Cl.: B60T 8/17

(54) **BREMSSTEUEREINRICHTUNG FÜR EINE BREMSANLAGE EINES SCHIENENFAHRZEUGS, BREMSANLAGE, SCHIENENFAHRZEUG UND VERFAHREN ZUM BETREIBEN EINER BREMSSTEUEREINRICHTUNG**
BRAKE CONTROL DEVICE FOR A BRAKE SYSTEM OF A RAIL VEHICLE, BRAKE SYSTEM, RAIL VEHICLE AND METHOD FOR OPERATING A BRAKE CONTROL DEVICE
DISPOSITIF DE COMMANDE DE FREINAGE POUR SYSTÈME DE FREINAGE DE VÉHICULE FERROVIAIRE, SYSTÈME DE FREINAGE, VÉHICULE FERROVIAIRE ET PROCÉDÉ POUR FAIRE FONCTIONNER UN DISPOSITIF DE COMMANDE DE FREINAGE

(30) Priorität: 09.09.2011 DE 102011113025
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: ELSTORPFF, Marc-Gregory, München 80638 (DE); NOCK, Marco, 85622 Feldkirchen (DE); VAN DE LÖCHT, Miriam, 81373 München (DE)
(86) Internationale Anmeldenummer: PCT/EP2012/067570
(87) Internationale Veröffentlichungsnummer: WO 2013/034734

(56) Entgegenhaltungen:
- EP-A2- 1 950 111
- WO-A2-2010/069520
- DE-A1-102007 006 131
- DE-B3-102006 011 963
- US-A- 5 201 834
- US-A- 5 744 707
- US-A1- 2004 138 791
- US-A1- 2009 255 329
- US-B1- 7 117 137

## Beschreibung

Die vorliegende Erfindung betrifft eine Bremssteuereinrichtung für eine Bremsanlage eines Schienenfahrzeugs, eine Bremsanlage für ein Schienenfahrzeug mit einer solchen Bremssteuereinrichtung, ein Schienenfahrzeug sowie ein Verfahren zum Betreiben einer Bremssteuereinrichtung für eine Bremsanlage eines Schienenfahrzeugs.

Moderne Schienenfahrzeuge können über eine Vielzahl von unterschiedlichen Arten von Bremseinrichtungen verfügen. In der Regel ist bei einem Schienenfahrzeug eine pneumatische Bremsanlage vorhanden, die ein Schienenfahrzeug über das pneumatische Betätigen von Reibungsbremselementen abzubremsen vermag. Ferner gibt es beispielsweise Magnetschienenbremsen und Wirbelstrombremsen. Wirbelstrombremsen können verschleißfrei eine Abbremsung eines Fahrzeugs erreichen. Beim Betätigen von Reibbremseinrichtungen werden miteinander in Kontakt stehende Reibpaare erheblich belastet. Ein solches Reibpaar kann etwa eine Scheibe einer Bremsscheibe und einen Bremsbelag einer Bremsbacke bei einer Scheibenbremse oder einen Belag eines Bremsklotzes und eine Radlauffläche bei einer Klotzbremse umfassen. Insbesondere Bremsbeläge unterliegen dabei einem hohen Verschleiß. Der Verschleiß einzelner Bremsbeläge muss regelmäßig in aufwendigen Wartungsverfahren überprüft werden, um die Funktionsweise der Bremsen zu gewährleisten. Während einer derartigen Wartung kann das Schienenfahrzeug allerdings nicht für einen Betrieb eingesetzt werden.

Eine Bremssteuereinrichtung mit den Merkmalen des Oberbegriffs des Anspruchs 1 ist aus der WO 2010/069520 A2, US 5 201 834 A oder US 2009/255329 A1 bekannt.

DE 10 2006 011963 B3 offenbart ein Verfahren zum Bremsen eines Schienenfahrzeugs, bei dem die abzubremsende Masse des Schienenfahrzeuges und für jedes Bremssystem die Kannkräfte ermittelt werden, die momentan erforderliche Bremskraft ermittelt wird und die erforderliche Bremskraft unter Berücksichtigung der abzubremsenden Masse und der Kannkräfte auf die Bremssysteme verteilt wird, indem die Bremssysteme einzeln oder kombiniert angesteuert werden.

Die US 2004/138791 A1 offenbart eine Bremssteuereinrichtung, bei der eine Verschleißschätzung unter Berücksichtigung eines Brems-Betätigungsdruckes vorgenommen wird. Die DE 34 07 716 A1 betrifft ebenfalls eine derartige Bremssteuereinrichtung.

Eine Aufgabe der vorliegenden Erfindung besteht darin, eine verbesserte Verschleißüberwachung zu ermöglichen, auf deren Basis ein verschleißoptimiertes Betreiben einer Bremsanlage eines Schienenfahrzeugs möglich ist. Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug einen oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Eine Bremsanlage kann eine hydraulische, insbesondere eine elektrohydraulische oder eine pneumatische, insbesondere eine elektropneumatische Bremsanlage sein. Es ist vorstellbar, dass die Bremsanlage eine elektrische oder elektromechanische Bremsanlage ist. Eine Bremsanlage kann mindestens eine entsprechende Bremsvorrichtung aufweisen. Eine pneumatische oder hydraulische Bremsvorrichtung, die einen pneumatischen oder hydraulischen Bremsdruck in eine Bremskraft umzusetzen vermag, kann als druckbetätigte Bremsvorrichtung angesehen werden. Eine elektrische oder elektromechanische Bremsvorrichtung vermag es, einen elektrischen Bremsstrom in eine Bremskraft umzusetzen, und kann als elektrisch betätigte Bremsvorrichtung angesehen werden. Es kann eine Hauptsteuerventileinrichtung der Bremsanlage vorgesehen sein, die einen Bremsdruck für eine oder mehrere pneumatische oder hydraulische Bremsvorrichtungen bereitzustellen vermag. Eine Hauptsteuerventileinrichtung kann dazu ausgebildet sein, nach Maßgabe einer elektronischen Steuereinrichtung den Bremsdruck bereitzustellen. Es kann vorgesehen sein, dass die Hauptsteuerventileinrichtung es vermag, einen Vorsteuerdruck in einen Bremsdruck umzusetzen, beispielsweise durch Druckverstärkung und/oder Umsetzung des Drucks auf ein größeres Volumen. Eine elektropneumatische oder elektrohydraulische Bremsanlage kann insbesondere elektrisch ansteuerbare Ventile wie Magnetventile und/oder elektrisch ansteuerbare Vorsteuerventile aufweisen. Eine Bremsvorrichtung einer Bremsanlage kann zur Bremsung eines einzelnen Rades und/oder einer Achse des Schienenfahrzeugs vorgesehen sein. Eine Bremsvorrichtung, insbesondere eine pneumatische oder hydraulische Bremsvorrichtung, kann einen Krafterzeuger wie einen druckbetätigten Zylinder aufweisen, der insbesondere ein pneumatischer oder hydraulischer Zylinder sein kann, und der bei Beaufschlagung mit einem Druck eine Reibbremseinrichtung betätigt. Es ist auch vorstellbar, dass eine Bremsvorrichtung mindestens einen Krafterzeuger aufweist, der bei Versorgung mit einem Bremsstrom eine Reibbremseinrichtung betätigt. Eine Reibbremseinrichtung ist dazu vorgesehen, durch einen reibenden Kontakt zwischen zwei sich relativ zueinander bewegenden Komponenten eines Reibpaares eine Bremsung zu erreichen. Ein Reibpaar kann allgemein einen Bremsbelag und eine zugeordnete Reibfläche umfassen, wie beispielsweise eine Radlauffläche oder eine Bremsfläche einer Bremsscheibe, die bei einer Bremsung in reibenden Kontakt miteinander gebracht werden. Dabei kann eine Reibbremseinrichtung beispielsweise eine Scheibenbremse mit einer Bremsscheibe sein, die dadurch betätigt wird, dass über eine Bremszange eine oder mehrere Reibbremselemente wie Bremsbacken mit einem Bremsbelag in reibenden Kontakt mit der Bremsscheibe gebracht werden. Ein weiteres Beispiel für eine Reibbremseinrichtung kann ein Bremsklotz mit einem Bremsbelag sein, der durch einen Krafterzeuger wie einen druckbetätigten Zylinder derart betätigbar ist, dass der Bremsklotz mit einer Radlauffläche in reibenden Kontakt kommt. Es ist vorstellbar, dass eine Reibbremseinrichtung jeweils zum Bremsen eines einzelnen Rades oder einer Achse vorgesehen ist. Ein auf den Krafterzeuger oder den druckbetätigten Zylinder ausgeübter Druck kann als Bremsdruck bezeichnet werden. Analog kann ein elektrischer Strom zur Betätigung eines Krafterzeugers als Bremsstrom bezeichnet werden. Die bei Betätigen einer Reibbremseinrichtung durch den Krafterzeuger ausgeübte Kraft kann als Bremskraft bezeichnet werden. Die Bremskraft hängt von dem ausgeübten Bremsdruck oder Bremsstrom sowie von der Konstruktion und Funktionsweise der Reibbremseinrichtung ab. Als Bremsmoment kann das Moment bezeichnet werden, welches zum Bremsen auf ein Rad ausgeübt wird. Eine Bremskraft kann auf ein ruhendes Rad ausgeübt werden. Ein Bremsmoment entsteht, wenn auf ein bewegtes Rad eine Bremskraft ausgeübt wird. Das Bremsmoment hängt insbesondere von der Bremskraft und von der Radgeometrie ab, insbesondere von einem Raddurchmesser. Durch Ausüben einer Bremskraft oder eines Bremsmomentes auf eine Reibbremseinrichtung wird auf die Reibbremseinrichtung, insbesondere in eine Kontaktfläche zwischen zwei sich gegeneinander bewegenden Elementen eines Reibpaars, eine bestimmte Belastung ausgeübt. Dabei kann beispielsweise als Belastung eine bestimmte Bremsenergie in die Reibbremseinrichtung eingetragen werden. Diese Belastung oder Energie führt durch Erwärmung der aneinander reibenden Flächen und beispielsweise durch Abrieb des Bremsbelags zu einem Verschleiß. Eine elektronische Steuereinrichtung kann eine Bremssteuereinrichtung für eine Bremsanlage eines Schienenfahrzeugs sein. Die Bremssteuereinrichtung kann beispielsweise ein Gleitschutzrechner, ein Bremsrechner oder eine andere zur Steuerung der Bremsanlage eines Schienenfahrzeugs ausgebildete Steuereinrichtung sein. Eine Verbindung zur Datenübermittlung kann allgemein eine Funkverbindung und/oder eine kabelgebundene Verbindung bezeichnen, etwa über ein optisches Kabel und/oder elektrisch leitende Drähte.

Die vorliegende Erfindung betrifft eine Bremssteuereinrichtung für eine Bremsanlage eines Schienenfahrzeugs, die dazu ausgebildet ist, während eines Bremsvorgangs eine Belastung mindestens einer während des Bremsvorgangs betätigten Reibbremseinrichtung zu ermitteln, wobei die Bremssteuereinrichtung ferner dazu ausgebildet ist, Verschleißdaten in einer Speichereinrichtung zu speichern, welche auf der ermittelten Belastung basieren. Somit kann basierend auf einer Belastung einer Reibbremseinrichtung auf einen Verschleiß der Reibbremseinrichtung geschlossen werden, ohne dass eine visuelle Überprüfung des Bremsbelags notwendig ist. Auf diese Art lassen sich Wartungszyklen verlängern und die Steuerung und/oder Regelung der Bremsanlage verbessern. Das Ermitteln einer Belastung für eine betätigte Reibbremseinrichtung kann das Erfassen und/oder Empfangen von Daten umfassen, welche die Belastung angeben oder das Berechnen und/oder Abschätzen der Belastung durch die Bremssteuereinrichtung ermöglichen. Das Ermitteln einer Belastung kann das Berechnen und/oder Abschätzen der Belastung umfassen, beispielsweise basierend auf entsprechenden Daten. Derartige Daten können insbesondere Daten sein, welche eine Bremskraft und/oder ein Bremsmoment angeben, das während der Bremsung auf die aneinander reibenden Elemente der Reibbremseinrichtung beziehungsweise auf das Rad aufgebracht wird. Die Bremssteuereinrichtung kann zum Ermitteln einer Belastung basierend auf experimentell ermittelten Daten einer Reibbremseinrichtung und/oder einem Modell der Reibbremseinrichtung ausgebildet sein. Dabei kann insbesondere die Aufhängung der Reibbremseinrichtung an einem Fahrzeug, beispielsweise an einem Drehgestell, berücksichtigt werden. Entsprechende vorbestimmte Daten beziehungsweise Modellparameter können in einer Speichereinrichtung der Bremssteuereinrichtung gespeichert sein. Die Bremssteuereinrichtung kann dazu ausgebildet sein, eine Belastung über ein bestimmtes Zeitintervall zu ermitteln. Es kann vorgesehen sein, dass die Bremssteuereinrichtung dazu ausgebildet ist, einen zeitlichen Verlauf einer Belastung während des Bremsvorgangs zu ermitteln. Auf diese Art kann eine Änderung einer auf eine Reibbremseinrichtung ausgeübten Bremskraft oder des Bremsmomentes oder der Belastung während einer Bremsung erfasst werden. Die Speichereinrichtung kann mit der Bremssteuereinrichtung verbunden oder verbindbar sein oder als Teil der Bremssteuereinrichtung ausgebildet sein. Die ermittelte Belastung kann einem Energieeintrag in die Reibbremseinrichtung während des Bremsvorgangs entsprechen, insbesondere einem Energieeintrag in eine oder mehrere reibende Komponenten, wie beispielsweise einem Bremsbelag. Die Belastung kann als Energieeintrag in die Reibbremseinrichtung parametrisiert sein. Verschleißdaten können auf einem Modell der Reibbremseinrichtung basieren, welches eine ausgeübte Bremskraft und/oder ein Bremsmoment in Beziehung zu einem Energieeintrag in die Reibbremseinrichtung setzt. Es kann zweckmäßig sein, dass die Bremssteuereinrichtung dazu ausgebildet ist, die Verschleißdaten über eine Vielzahl von Bremsvorgängen hinweg zu speichern. Insbesondere kann die Bremssteuereinrichtung dazu ausgebildet sein, den Verschleiß einer Reibbremseinrichtung basierend auf den Verschleißdaten über einen längeren Zeitraum zu überwachen. Die Verschleißdaten können auf durch weitere Bearbeitung der ermittelten Belastung ermittelten Daten basieren. Es kann vorgesehen sein, dass Verschleißdaten durch mathematische Transformationen oder Umrechnungen aus Belastungsdaten ermittelt oder berechnet werden. Es ist auch vorstellbar, dass eine ermittelte Belastung direkt als Verschleißdatum gespeichert wird. Die Verschleißdaten für eine bestimmte Reibbremseinrichtung können mindestens einen Parameter aufweisen, der eine Summe der Energieeinträge in die zugeordnete Reibbremseinrichtung über eine Vielzahl von Bremsungen und/oder einen längeren Zeitablauf repräsentiert. Ein längerer Zeitablauf kann sich insbesondere über eine oder mehrere Fahrten erstrecken. Eine entsprechende Datenspeicherung kann beispielsweise nach einem Austausch von Reibelementen, etwa einem Bremsbelagwechsel oder einer Wartung gestartet werden. Es ist vorstellbar, zusätzlich oder alternativ für einzelne Bremsungen jeweils einen zugehörigen Energieeintrag oder eine ermittelte Belastung separat zu speichern. Basierend auf Verschleißdaten für Einzelbremsungen können beispielsweise überproportionale Belastungen oder überproportionaler Verschleiß einer Reibbremseinrichtung bei besonders harten Bremsungen mit hohem Bremsdruck oder Bremsstrom bei der Beurteilung eines Verschleißes berücksichtigt werden. Die Bremssteuereinrichtung kann dazu ausgebildet sein, basierend auf den Verschleißdaten einen Verschleiß einer Reibbremseinrichtung, insbesondere eines Bremsbelags, zu ermitteln und/oder abzuschätzen. Beispielsweise kann zur Parametrisierung eines Verschleißes eines Bremsbelags und/oder einer Reibbremseinrichtung ein entsprechender Gesamtenergieeintrag verwendet werden. Ein Gesamtenergieeintrag kann dabei der Summe der Energieeinträge über den betrachteten Zeitablauf hinweg entsprechen, etwa der Summe der Energieeinträge seit Beginn der Speicherung. Verschleißdaten können jeweils einem Reibelement, einem Reibpaar und/oder einer Reibbremseinrichtung zugeordnet sein.

Bei einer Weiterbildung kann die Bremssteuereinrichtung dazu ausgebildet sein, während eines Bremsvorgangs die Belastung mehrerer Reibbremseinrichtungen zu ermitteln und Verschleißdaten für jede der Reibbremseinrichtung zu speichern, die jeweils der entsprechenden Reibbremseinrichtung der mehreren Reibbremseinrichtungen zugeordnet sind. Somit kann für eine Vielzahl von Reibbremseinrichtungen eine Verschleißüberwachung erfolgen. Insbesondere kann für jede der Reibbremseinrichtungen eine individuelle Verschleißüberwachung durchgeführt werden.

Die Bremssteuereinrichtung kann dazu ausgebildet sein, die Bremsanlage basierend auf Verschleißdaten anzusteuern. Somit kann eine verschleißoptimierte Bremsung erfolgen. Dazu können die Verschleißdaten aus einer Speichereinrichtung gelesen werden. Es können einzelne oder mehrere Reibbremseinrichtungen und/oder zugeordnete Ventileinrichtungen der Bremsanlage angesteuert werden. Ein verschleißoptimiertes Ansteuern der Reibbremseinrichtungen kann bei einer Bremsung erfolgen, bei der nicht alle Reibbremseinrichtungen mit maximaler Wirkung gebremst werden müssen, insbesondere bei einer Anpassungsbremsung.

Es kann vorgesehen sein, dass die Bremssteuereinrichtung dazu ausgebildet ist, mehrere Reibbremseinrichtungen basierend auf den Verschleißdaten asymmetrisch anzusteuern. Eine asymmetrische Ansteuerung kann die Betätigung unterschiedlicher Reibbremseinrichtungen mit unterschiedlichen Bremsdrücken oder Bremsströmen umfassen und/oder die Ausübung unterschiedlicher Bremskräfte und/oder Bremsmomente auf unterschiedliche Reibbremseinrichtungen. Die Bremssteuereinrichtung kann dazu ausgebildet sein, die Ansteuerung basierend auf einer Bremsanforderung durch einen Zugführer oder eine Steuereinrichtung durchzuführen. Es kann vorgesehen sein, dass es die Bremssteuereinrichtung vermag, basierend auf einer Bremsanforderung und den Verschleißdaten eine asymmetrische Ansteuerung zur Erfüllung der Bremsanforderung zu ermitteln und anzusteuern. Dabei kann beispielsweise vorgesehen sein, dass Reibbremseinrichtungen mit hohem Verschleiß mit einem geringeren Bremsdruck versorgt werden als Reibbremseinrichtungen, die bisher einen geringeren Verschleiß aufweisen. Es versteht sich, dass in diesem Fall die Bremsanlage entsprechend ausgebildet ist, um eine asymmetrische Versorgung von Reibbremseinrichtungen mit Bremsdruck oder Bremsstrom zu ermöglichen. Dazu können beispielsweise Reibbremseinrichtungen oder druckbetätigten Bremsvorrichtungen Steuerventileinrichtungen zugeordnet sein. Über derartige Steuerventilanordnungen kann basierend auf einem durch eine Hauptsteuerventileinrichtung bereitgestellten Bremsdruck ein individueller Bremsdruck eingestellt werden. Derartige Steuerventileinrichtungen können beispielsweise durch eine Steuereinrichtung ansteuerbare Ablassventile umfassen. Zur asymmetrischen Versorgung mit Bremsstrom kann die Steuereinrichtung dazu ausgebildet sein, eine oder mehrere Stromversorgungen derart anzusteuern, dass sie die gewünschten Bremsströme bereitstellen. Somit kann insgesamt der Verschleiß von Reibbremseinrichtungen über das Schienenfahrzeug hinweg homogenisiert werden. Es ist vorstellbar, dass eine asymmetrische Ansteuerung basierend auf zusätzlichen Daten bezüglich einzelner Reibbremseinrichtungen und/oder zugeordneter Räder oder Achsen durchgeführt wird. Beispielsweise kann jeweils ein Radschlupf eines einer Reibbremseinrichtung zugeordneten Rades überwacht werden. Dazu können geeignete Raddrehzahlsensoren und/oder Geschwindigkeitssensoren vorgesehen sein. Die Bremssteuereinrichtung kann dazu ausgebildet sein, basierend auf dem Radschlupf und/oder basierend auf einem Kraftschluss zwischen dem Rad und der Schiene eine verschleißabhängige Ansteuerung der Reibbremseinrichtungen durchzuführen. Dabei kann vorgesehen sein, dass die Bremssteuereinrichtung dazu ausgebildet ist, Reibbremseinrichtungen mit hohem Kraftschluss und/oder besonders geeignetem Radschlupf mit hohem Bremsdruck oder Bremsstrom zu betätigen und Reibbremseinrichtungen mit niedrigerem Kraftschluss mit niedrigerem Bremsdruck zu betätigen. Es ist vorstellbar, dass die Bremssteuereinrichtung dazu ausgebildet ist, eine Ansteuerung der Reibbremseinrichtungen gemäß einer Bremsvorgabe derart durchzuführen, dass sich insgesamt ein optimierter Verschleiß ergibt. Beispielsweise kann dabei berücksichtigt werden, dass sich die Belastung einer Reibbremseinrichtung bei vorgegebenem Bremsdruck durch Verschleiß ändern kann, insbesondere durch Abrieb von Bremsbelägen. Ein optimierter Verschleiß kann beispielsweise einer bei einer Bremsung hervorgerufenen minimalen Gesamtbelastung einer oder mehrerer anzusteuernder Reibbremseinrichtungen entsprechen. Dabei kann vorgesehen sein, dass die Bremssteuereinrichtung es vermag, eine oder mehrere Reibbremseinrichtungen derart anzusteuern, dass die Gesamtbelastung, etwa die Summe der Energieeinträge in alle betrachteten Reibbremseinrichtungen, während einer Bremsung minimiert ist.

Die Bremsanlage kann insbesondere eine pneumatische Bremsanlage sein, welche mindestens eine pneumatisch betätigbare Reibbremseinrichtung aufweist. Derartige Bremsen dienen häufig als Betriebsbremse für das Schienenfahrzeug und unterliegen somit einer besonders hohen Belastung. Die mindestens eine Reibbremseinrichtung kann Teil einer pneumatischen Bremsvorrichtung sein. Alternativ kann die Bremsanlage eine hydraulische Bremsanlage sein, welche entsprechend mindestens eine hydraulisch betätigbare Reibbremseinrichtung und/oder einen entsprechenden Krafterzeuger aufweist. Es ist auch vorstellbar, dass die Bremsanlage eine elektrische oder elektromechanische Bremsanlage ist, welche entsprechend mindestens eine elektrisch betätigbare Reibbremseinrichtung und/oder einen entsprechenden Krafterzeuger aufweist.

Es kann vorgesehen sein, dass die Bremssteuereinrichtung dazu ausgebildet ist, basierend auf den Verschleißdaten ein Signal auszugeben, welches Wartungsinformationen bezüglich der mindestens einen Reibbremseinrichtung enthält. Beispielsweise kann die Bremssteuereinrichtung dazu eingerichtet sein, die Verschleißdaten auszugeben und/oder anzuzeigen, um eine vereinfachte Wartung zu ermöglichen. Insbesondere kann vorgesehen sein, dass die Bremssteuereinrichtung dazu ausgebildet ist, dann, wenn ein ermittelter Verschleiß beziehungsweise ein zugeordneter Parameter der Verschleißdaten einen vorbestimmten Schwellenwert überschreitet, ein Signal auszugeben, welches auf einen erhöhten Wartungsbedarf der zugeordneten Reibbremseinrichtung schließen lässt. Auf diese Art lassen sich Reibbremseinrichtungen mit einem erhöhten Wartungsbedarf identifizieren. Ein Signal kann durch die Bremssteuereinrichtung an eine geeignete Anzeigevorrichtung und/oder an eine weitere Steuereinrichtung übermittelt werden.

Die Bremssteuereinrichtung kann mit einer Sensoreinrichtung verbunden oder verbindbar sein, welche es vermag, Daten an die Bremssteuereinrichtung zu übermitteln, auf deren Basis die Bremssteuereinrichtung die Belastung zu ermitteln vermag. Die Sensoreinrichtung kann insbesondere einen oder mehrere Sensoren umfassen, die zum Erfassen einer Bremskraft und/oder eines Bremsmomentes ausgebildet sind. Einem Sensor für Bremskraft und/oder Bremsmoment kann insbesondere eine Reibbremseinrichtung zugeordnet sein. Die auf eine Reibbremseinrichtung ausgeübte Bremskraft beziehungsweise das auf ein Rad ausgeübte Bremsmoment sind ein guter Indikator für eine Belastung einer Reibbremseinrichtung während eines Bremsvorgangs. Ferner kann die Bremssteuereinrichtung dazu eingerichtet sein, basierend auf einer von der Sensoreinrichtung erfassten Bremskraft und/oder einem Bremsmoment, das auf ein Rad beziehungsweise auf eine Reibbremseinrichtung ausgeübt wird, einen Energieeintrag in die Reibbremseinrichtung zu ermitteln. Der Energieeintrag kann basierend auf einem Modell der Reibbremseinrichtung ermittelt werden.

Erfindungsgemäß ist ferner eine Bremsanlage für ein Schienenfahrzeug mit einer hierin beschriebenen Bremssteuereinrichtung vorgesehen. Die Bremsanlage kann beispielsweise eine oder mehrere Sensoreinrichtungen aufweisen, die mit der Bremssteuereinrichtung zur Übermittlung von Daten verbunden oder verbindbar sind. Es ist vorstellbar, dass die Bremsanlage eine oder mehrere Reibbremseinrichtungen aufweist. Vorzugsweise ist die Bremssteuereinrichtung dazu ausgebildet, die Reibbremseinrichtungen der Bremsanlage anzusteuern, beispielsweise basierend auf den Verschleißdaten. Die Bremsanlage kann ferner pneumatische oder hydraulische Leitungen und Ventileinrichtungen aufweisen. Eine oder mehrere derartige Ventileinrichtungen können durch die Bremssteuereinrichtung ansteuerbar sein. Insbesondere kann eine Hauptsteuerventileinrichtung vorgesehen sein, die durch die Bremssteuereinrichtung ansteuerbar ist und über die ein Bremsdruck für die Reibbremseinrichtungen beziehungsweise ihnen zugeordneten pneumatischen Krafterzeugern bereitgestellt werden kann. Die Bremsanlage kann mindestens einen elektrisch betätigten Krafterzeuger und/oder mindestens eine entsprechende Bremsvorrichtung aufweisen. Es kann vorgesehen sein, dass einzelnen Reibbremseinrichtungen jeweils zusätzliche Ventileinrichtungen zugeordnet sind, welche durch einen Gleitschutzrechner und/oder die Bremssteuereinrichtung ansteuerbar sind, um einen durch die Hauptsteuerventileinrichtung bereitgestellten Bremsdruck individuell zu modifizieren. Auf diese Art kann insbesondere eine asymmetrische Ansteuerung der Reibbremseinrichtungen erfolgen, das heißt eine Betätigung der Reibbremseinrichtungen mit unterschiedlichen Bremsdrücken und/oder unterschiedlicher Bremskraft.

Die Erfindung betrifft außerdem ein Schienenfahrzeug mit einer hierin beschriebenen Bremsanlage und/oder einer hierin beschriebenen Bremssteuereinrichtung.

Ferner betrifft die Erfindung ein Verfahren zum Betreiben einer Bremssteuereinrichtung für eine Bremsanlage eines Schienenfahrzeugs mit den Schritten des Ermittelns, durch die Bremssteuereinrichtung, einer Belastung mindestens einer bei einem Bremsvorgang betätigten Reibbremseinrichtung der Bremsanlage, und des Speicherns, durch die Bremssteuereinrichtung, von auf der ermittelten Belastung basierenden Verschleißdaten. Die Bremssteuereinrichtung kann eine der hierin beschriebenen Bremssteuereinrichtungen sein. Es ist vorstellbar, dass die Bremsanlage eine der hierin beschriebenen Bremsanlagen ist. Es kann die Belastung mehrerer Reibbremseinrichtungen ermittelt werden. Es ist vorstellbar, Verschleißdaten zu speichern, die jeweils einer einzelnen Reibbremseinrichtung zugeordnet sind. Es kann der Schritt des Ansteuerns der Bremsanlage, durch die Bremssteuereinrichtung, basierend auf den Verschleißdaten vorgesehen sein. Dabei kann die Bremssteuereinrichtung die mehreren Reibbremseinrichtungen basierend auf den Verschleißdaten asymmetrisch ansteuern. Die Bremsanlage kann eine pneumatische Bremsanlage sein, bei der mindestens eine Reibbremseinrichtung pneumatisch betätigt wird. Basierend auf den Verschleißdaten kann ein Signal ausgegeben werden, welches Wartungsinformationen bezüglich der mindestens einen Reibbremseinrichtung enthält. Es kann vorgesehen sein, dass eine mit der Bremssteuereinrichtung verbundene Sensoreinrichtung Daten an die Bremssteuereinrichtung übermittelt, auf deren Basis die Bremssteuereinrichtung die Belastung ermittelt.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer Bremsanlage eines Schienenfahrzeugs mit einer Bremssteuereinrichtung; und
- Figur 2: schematisch ein Flussdiagramm eines Verfahrens zum Betreiben einer Bremssteuereinrichtung für eine Bremsanlage eines Schienenfahrzeugs.

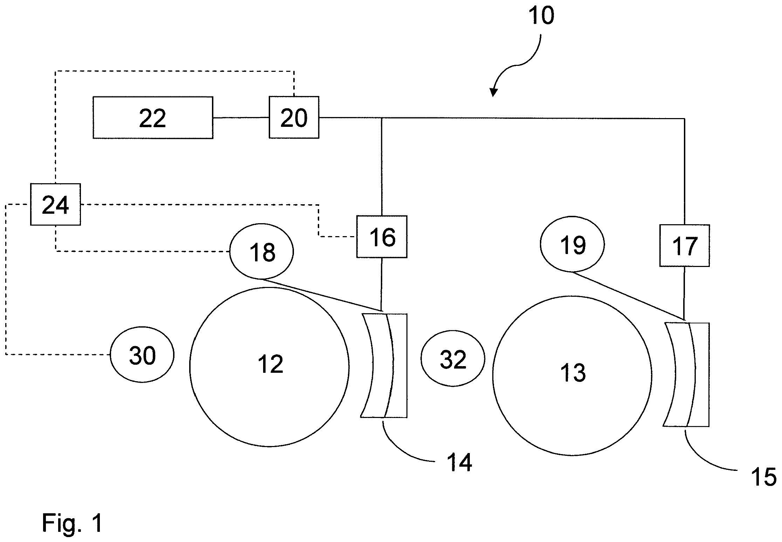

Figur 1 zeigt schematisch eine Bremsanlage 10 eines Schienenfahrzeugs. Mechanische und pneumatische Verbindungen und Leitungen sind mit durchgezogenen Linien dargestellt, während elektrische Verbindungen oder Kommunikationskanäle gestrichelt dargestellt sind. Aus Gründen der Übersicht sind die elektrischen Steuerleitungen für die dem zweiten Rad zugeordneten Komponenten nicht dargestellt. Sie sind allerdings mit den dem ersten Rad und seinen Komponenten zugeordneten Steuerleitungen vergleichbar. Die Bremsanlage 10 ist dazu vorgesehen, Räder 12 und 13 des Schienenfahrzeugs zu bremsen. In diesem Beispiel ist vorgesehen, dass sich die Räder 12 und 13 auf unterschiedlichen Radachsen befinden. Dem ersten Rad 12 ist ein erster Bremsklotz 14 zugeordnet. Dem zweiten Rad 13 ist ein zweiter Bremsklotz 15 zugeordnet. Jeder der Bremsklötze 14, 15 weist einen Bremsbelag auf, der dann, wenn der Bremsklotz 14, 15 mit dem Bremsbelag an die Lauffläche des zugeordneten Rades 12, 13 gedrückt wird, das zugeordnete Rad 12, 13 abbremst. Dabei unterliegt der Bremsbelag einem Verschleiß, der sich unter anderem im Abrieb des Bremsbelags niederschlägt. Der Bremsklotz 14 ist durch einen Krafterzeuger 16 zum Bremsen betätigbar. Der Krafterzeuger 16 ist über eine Versorgungsleitung mit einer Hauptsteuerventileinrichtung 20 verbunden. Über die Hauptsteuerventileinrichtung 20 kann dem Krafterzeuger 16 Druckluft zugeführt werden. Ähnlich ist dem Bremsklotz 15 ein Krafterzeuger 17 zugeordnet, der ebenfalls über die Hauptsteuerventileinrichtung 20 mit Druckluft zur Betätigung des Krafterzeugers versorgt werden kann, um den Bremsklotz 15 mit der Radlauffläche des Rades 13 in Kontakt zu bringen. Die Hauptsteuerventileinrichtung 20 ist mit einer Druckluftvorratseinrichtung 22 verbunden, aus der sie Druckluft zu entnehmen vermag, um bei einer Bremsung den Krafterzeugern 16, 17 Druckluft bereitzustellen. Somit ist die Bremsanlage 10 in diesem Beispiel als pneumatische Bremsanlage ausgebildet. Ferner ist eine als Bremsrechner ausgebildete elektronische Bremssteuereinrichtung 24 vorgesehen, welche es vermag, die Hauptsteuerventileinrichtung 20 anzusteuern. Dazu kann die Hauptsteuerventileinrichtung 20 insbesondere eine oder mehrere Magnetventile aufweisen, die durch die Bremssteuereinrichtung 24 ansteuerbar sind. Es kann mindestens eine nicht gezeigte Bremsdrucksensoreinrichtung zur Kommunikation mit der Bremssteuereinrichtung 24 verbunden sein. Eine derartige Bremsdrucksensoreinrichtung kann einen von der Hauptsteuerventileinrichtung 20 bereitgestellten Bremsdruck und/oder jeweils den zur Betätigung der einzelnen Krafterzeuger wirksamen Bremsdruck erfassen und an die Bremssteuereinrichtung 24 übermitteln. Die Bremssteuereinrichtung 24 kann dazu ausgebildet sein, die Ansteuerung der Bremsanlage beziehungsweise ihrer Ventileinrichtungen basierend auf Druckdaten durchzuführen, welche von einer solchen Bremsdrucksensoreinrichtung übermittelt werden. Dem ersten Rad 12 ist ferner ein Belastungssensor 18 zugeordnet, der es vermag, eine bei einer Bremsung auf den Bremsklotz 14 ausgeübte Belastung zu ermitteln, beispielsweise eine Bremskraft und/oder ein Bremsmoment. Ein derartiger Belastungssensor kann beispielsweise einen oder mehrere Dehnungsmessstreifen aufweisen. Der Sensor 18 ist zur Übermittlung von Daten mit der elektronischen Bremssteuereinrichtung 24 verbunden. Ferner ist dem Rad 12 ein erster Raddrehzahlsensor 30 zugeordnet, welcher die Drehzahl des Rades 12 zu erfassen vermag. Auch dieser Sensor ist zur Datenübertragung mit der elektronischen Steuereinrichtung 24 verbunden. Analog ist dem zweiten Rad ein zweiter Belastungssensor 19 zugeordnet, welcher eine auf den Bremsklotz 15 ausgeübte Belastung wie eine Bremskraft und/oder ein Bremsmoment zu ermitteln vermag. Darüber hinaus ist dem zweiten Rad 13 ein zweiter Raddrehzahlsensor 32 zugeordnet. Die Krafterzeuger 16, 17 können jeweils pneumatische Zylinder umfassen, die bei Beaufschlagung mit einem Bremsdruck eine Bremskraft auf den zugeordneten Bremsklotz 14, 15 ausüben. Die Krafterzeuger 16, 17 können jeweils eine durch die elektronische Steuereinrichtung 24 ansteuerbare Ventileinrichtung aufweisen, über die ein durch die Hauptsteuerventileinrichtung 20 bereitgestellter Hauptbremsdruck individuell für den jeweiligen pneumatischen Zylinder der Krafterzeuger 16, 17 modifiziert werden kann. Somit können insbesondere die Krafterzeuger 16, 17 nach Maßgabe der elektronischen Steuereinrichtung 24 unterschiedliche Bremsdrücke an die Bremsklötze 14, 15 anlegen und somit die Reibbremseinrichtungen asymmetrisch betätigen. In der Figur 1 kann der Krafterzeuger 16 mit dem Bremsklotz 14 als erste Reibbremseinrichtung angesehen werden. Der Krafterzeuger 17 und der zweite Bremsklotz 15 können als zweite Reibbremseinrichtung angesehen werden. Es versteht sich, dass beide Reibbremseinrichtungen zugehörige Bremsgestänge und Aufhängungen aufweisen können, die nicht gezeigt sind. Die erste und zweite Reibbremseinrichtung und die Hauptsteuerventileinrichtung 20 können als pneumatische Bremsvorrichtung angesehen werden, die durch die Bremssteuereinrichtung 24 ansteuerbar ist. Statt als Klotzbremsen können die Reibbremseinrichtungen auch als Scheibenbremsen ausgebildet sein. Auch in diesem Fall kann jeweils ein Belastungssensor vorgesehen sein, welcher eine bei der Bremsung ausgeübte Bremskraft und/oder ein Bremsmoment zu erfassen und an die elektronische Bremssteuereinrichtung 24 zu übertragen vermag. Die Bremssteuereinrichtung 24 ist dazu ausgebildet, Daten von den Sensoren 18 und 19 zu empfangen und basierend auf diesen Daten jeweils eine Belastung der zugeordneten Reibbremseinrichtung des ersten Rades 12 beziehungsweise des zweiten Rades 13 zu ermitteln. Aus der ermittelten Belastung berechnet die elektronische Bremssteuereinrichtung 24 Verschleißdaten, in diesem Beispiel einen während der Bremsung aufgebrachten Energieeintrag in die jeweilige Reibbremseinrichtung. Für jede Reibbremseinrichtung beziehungsweise jeden Bremsbelag der Bremsklötze 14, 15 wird ein Parameter gespeichert, der einen Gesamtenergieeintrag über eine Vielzahl von Bremsungen hinweg repräsentieren kann.

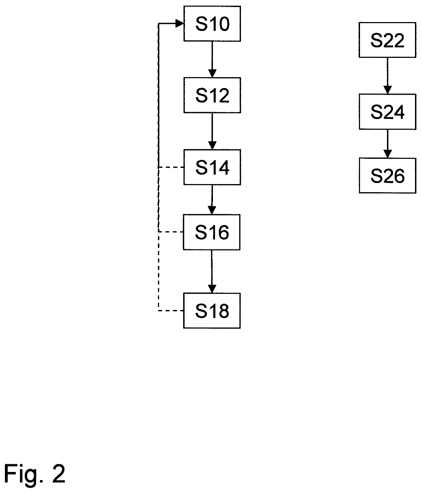

In Figur 2 ist ein Flussdiagramm eines Verfahrens zum Betreiben einer Bremssteuereinrichtung für eine Bremsanlage eines Schienenfahrzeugs dargestellt. In einem Schritt S10 des Verfahrens erfassen mehrere Sensoren einer Sensoreinrichtung, die beispielsweise Sensoren 18 und 19 der Figur 1 umfassen kann, während eines Bremsvorgangs Daten bezüglich einer Belastung jeweils einer einem Sensor zugeordneten Reibbremseinrichtung. Diese Daten können beispielsweise die auf die zugeordnete Reibbremseinrichtung ausgeübte Bremskraft und/oder ein zugeordnetes Bremsmoment betreffen. In einem Schritt S12 empfängt eine elektronische Bremssteuereinrichtung, beispielsweise die elektronische Bremssteuereinrichtung 24 der Figur 1, die von den Sensoren erfassten und übermittelten Daten. In einem nachfolgenden Schritt S14 ermittelt die Steuereinrichtung jeweils die Belastung und/oder den zeitlichen Verlauf der Belastung einer zugeordneten Reibbremseinrichtung basierend auf den empfangenen Daten. Die Belastung kann beispielsweise als Energieeintrag in eine Reibbremseinrichtung während der Bremsung parametrisiert sein. In einem Schritt S16 berechnet die Bremssteuereinrichtung basierend auf der ermittelten Belastung für jede Reibbremseinrichtung zugeordnete Verschleißdaten. Beispielsweise ist vorgesehen, dass die Bremssteuereinrichtung für jede Reibbremseinrichtung einen zugeordneten Gesamtenergieeintrag über eine Vielzahl von Bremsungen hin ermittelt. Dazu kann beispielsweise die Bremssteuereinrichtung für jede Reibbremseinrichtung einen bisherigen Gesamtenergieeintrag, der in der Speichereinrichtung gespeichert ist, auslesen und durch Addition um einen während einer aktuellen Bremsung erzeugten Energieeintrag erhöhen, um einen aktuellen Gesamtenergieeintrag zu erhalten. Diese Anpassung kann nach erfolgter Bremsung oder während der Bremsung in Einzelschritten erfolgen. In einem auf den Schritt S16 nachfolgenden Schritt S18 speichert die Bremssteuereinrichtung die Verschleißdaten, beispielsweise den aktualisierten Gesamtenergieeintrag, für jede Reibbremseinrichtung ab. Es ist auch vorstellbar, dass die Schritte S16 und S18 nach einer Bremsung durchgeführt werden. Die Schritte S10 bis S14 können während eines Bremsvorgangs wiederholt werden, bis der Bremsvorgang beendet wird und zum Schritt S16 übergegangen wird. Es ist auch vorstellbar, die Schritte S10 bis S16 oder S10 bis S18 während einer Bremsung in Schleifen zu durchlaufen. Basierend auf abgespeicherten Daten kann für den Fall, dass eine Bremsung vorgesehen ist, eine Bremssteuerung durchgeführt werden. Die Bremssteuerung kann parallel oder unabhängig von den beschriebenen Schritten S10 bis S18 erfolgen, bei denen Verschleißdaten ermittelt und gespeichert werden. Diese Bremssteuerung basiert auf schon vorhandenen und gespeicherten Verschleißdaten. Dazu kann in einem Schritt S22 ein Vergleich von Verschleißdaten für einzelne Reibbremseinrichtungen durchgeführt werden. Bei diesem Vergleich kann insbesondere identifiziert werden, welche Reibbremseinrichtungen bisher einem besonders hohen Verschleiß und welche einem niedrigeren Verschleiß unterlegen sind, wobei ein Verschleiß durch die Verschleißdaten parametrisiert sein kann, insbesondere durch einen Gesamtenergieeintrag. In einem Schritt S24 kann basierend auf diesem Vergleich und basierend auf einer vorgegebenen Bremsanforderung eine asymmetrische Verteilung von Bremsdruck oder Bremsstrom berechnet werden. Bei dieser asymmetrischen Verteilung von Bremsdruck oder Bremsstrom zur Betätigung der Reibbremseinrichtungen können Reibbremseinrichtungen, die bisher einem niedrigen Verschleiß unterliegen, mit einem höheren Bremsdruck oder Bremsstrom beaufschlagt werden als Reibbremseinrichtungen, die bisher einem höheren Verschleiß unterliegen. Somit wird in die Reibbremseinrichtungen mit bisher niedrigem Verschleiß eine höhere Bremsenergie eingetragen, wodurch sich die Verschleißverteilung über mehrere Reibbremseinrichtungen ausgleichen beziehungsweise homogenisieren lässt. In einem Schritt S26 erfolgt das asymmetrische Ansteuern der Reibbremseinrichtungen basierend auf dem Ergebnis des Schritts S24. Dabei können insbesondere eine Hauptsteuerventileinrichtung und einzelnen Reibbremseinrichtungen zugeordnete Ventileinrichtungen derart angesteuert werden, dass sich die gewünschten berechneten Bremsdrücke oder Bremsströme für die einzelnen Reibbremseinrichtungen einstellen. Unabhängig vom Vorliegen einer Bremsung kann vorgesehen sein, dass in regelmäßigen Abständen und/oder bei Beendigung einer Fahrt Verschleißdaten, insbesondere Gesamtenergieeinträge für einzelne Reibbremseinrichtungen, mit vorgegebenen Schwellenwerten verglichen werden. Überschreiten Verschleißdaten für einzelne Reibbremseinrichtungen einen zugeordneten Schwellenwert, gibt die Bremssteuereinrichtung ein geeignetes Signal aus, um auf einen erhöhten Wartungsbedarf der zugeordneten Reibbremseinrichtung hinzuweisen. Es kann auch vorgesehen sein, dass die Steuereinrichtung allgemein Wartungsinformationen basierend auf den Verschleißdaten ausgibt, beispielsweise indem sie derartige Daten auf einer Anzeige darstellt oder an eine Wartungsrechnereinheit überträgt. Eine Wartungsrechnereinheit kann auf dem Schienenfahrzeug vorgesehen sein und/oder eine externe Rechnereinheit sein, die beispielsweise in einem Wartungsbereich vorgesehen sein kann.

### Bezugszeichenliste

- 10: Bremsanlage
- 12: erstes Rad
- 13: zweites Rad
- 14: erster Bremsklotz
- 15: zweiter Bremsklotz
- 16: erster Krafterzeuger
- 17: zweiter Krafterzeuger
- 18: erster Belastungssensor
- 19: zweiter Belastungssensor
- 20: Hauptsteuerventileinrichtung
- 22: Druckluftvorratseinrichtung
- 24: Bremssteuereinrichtung
- 30: erster Raddrehzahlsensor
- 32: zweiter Raddrehzahlsensor

## Patentansprüche

1. Bremssteuereinrichtung (24) für eine Bremsanlage (10) eines Schienenfahrzeugs, die dazu ausgebildet ist, während eines Bremsvorgangs die erzeugte Bremskraft bzw. den ergzeugte Bremsmoment mindestens einer während des Bremsvorgangs betätigten Reibbremseinrichtung (14, 16; 15, 17) zu ermitteln;
**dadurch gekennzeichnet, dass**
die Bremssteuereinrichtung (24) ferner dazu ausgebildet ist, Verschleißdaten in einer Speichereinrichtung zu speichern, welche auf der ermittelten Bremskraft bzw. auf dem ermittelten Bremsmoment basieren.

2. Bremssteuereinrichtung nach Anspruch 1, wobei die Bremssteuereinrichtung (24) dazu ausgebildet ist, während eines Bremsvorgangs die erzeugte Bremskraft bzw. den erzeugte Bremsmoment mehrerer Reibbremseinrichtungen (14, 16; 15, 17) zu ermitteln, und Verschleißdaten für jede der Reibbremseinrichtungen zu speichern, die jeweils der entsprechenden Reibbremseinrichtung (14, 16; 15, 17) zugeordnet sind.

3. Bremssteuereinrichtung nach Anspruch 1 oder 2, wobei die Bremssteuereinrichtung (24) dazu ausgebildet ist, die Bremsanlage (10) basierend auf den Verschleißdaten anzusteuern.

4. Bremssteuereinrichtung nach Anspruch 3, wobei die Bremssteuereinrichtung (24) dazu ausgebildet ist, mehrere Reibbremseinrichtungen (14, 16; 15, 17) basierend auf den Verschleißdaten asymmetrisch anzusteuern.

5. Bremssteuereinrichtung nach einem der vorhergehenden Ansprüche, wobei die Bremsanlage eine pneumatische Bremsanlage (10) ist, welche mindestens eine pneumatisch betätigbare Reibbremseinrichtung (14, 16; 15, 17) aufweist.

6. Bremssteuereinrichtung nach einem der vorhergehenden Ansprüche, wobei die Bremssteuereinrichtung (14, 16; 15, 17) dazu ausgebildet ist, basierend auf den Verschleißdaten ein Signal auszugeben, welches Wartungsinformationen bezüglich der mindestens einen Reibbremseinrichtung (14, 16; 15, 17) enthält.

7. Bremssteuereinrichtung nach einem der vorhergehenden Ansprüche, wobei die Bremssteuereinrichtung (24) mit einer Sensoreinrichtung (18, 19, 30, 32) verbunden oder verbindbar ist, welche es vermag, Daten an die Bremssteuereinrichtung (24) zu übermitteln, auf deren Basis die Bremssteuereinrichtung (24) die Belastung zu ermitteln vermag.

8. Bremsanlage (10) für ein Schienenfahrzeug mit einer Bremssteuereinrichtung (24) nach einem der Ansprüche 1 bis 7.

9. Schienenfahrzeug mit einer Bremsanlage (10) nach Anspruch 8 oder einer Bremssteuereinrichtung (24) nach einem der Ansprüche 1 bis 7.

10. Verfahren zum Betreiben einer Bremssteuereinrichtung (24) für eine Bremsanlage (10) eines Schienenfahrzeugs, mit den Schritten:
Ermitteln, durch die Bremssteuereinrichtung (24), einer erzeugten Bremskraft bzw. eines erzeugten Bremsmomentes mindestens einer bei einem Bremsvorgang betätigten Reibbremseinrichtung (14, 16; 15, 17) der Bremsanlage (10);
**gekennzeichnet durch**
Speichern, durch die Bremssteuereinrichtung (24), von auf der ermittelten Bremskraft bzw. auf dem ermittelten Bremsmoment basierenden Verschleißdaten.

## Claims

1. Brake control device (24) for a brake assembly (10) of a rail vehicle, which is designed to determine the braking force produced or the braking torque produced during a braking process by at least one frictional braking device (14, 16; 15, 17) that is actuated during the braking process;
**characterised in that**
the brake control device (24) is also designed to store wear data in a memory device, which data are based on the braking force or on the braking torque determined.

2. Brake control device according to Claim 1, wherein the brake control device (24) is designed to determine the braking force produced or the braking torque produced during a braking process by a plurality of frictional braking devices (14, 16; 15, 17), and to store wear data for each of the frictional braking devices (14, 16; 15, 17), in each case associated with the corresponding frictional braking device (14, 16; 15, 17).

3. Brake control device according to Claims 1 or 2, wherein the brake control device (24) is designed to control the brake assembly (10) on the basis of the wear data.

4. Brake control device according to Claim 3, wherein the brake control device (24) is designed to control a plurality of frictional braking devices (14, 16; 15, 17) asymmetrically, on the basis of the wear data.

5. Brake control device according to any of the preceding claims, wherein the brake assembly is a pneumatic brake assembly (10) that comprises at least one pneumatically actuated frictional braking device (14, 16; 15, 17).

6. Brake control device according to any of the preceding claims, wherein the brake control device (14, 16; 15, 17) is designed to emit a signal on the basis of the wear data, which signal contains maintenance information relating to the at least one frictional braking device (14, 16; 15, 17).

7. Brake control device according to any of the preceding claims, wherein the brake control device (24) is or can be connected to a sensor device (18, 19, 30, 32) which makes it possible to transmit data to the brake control device (24) on the basis of which the brake control device (24) can determine the load.

8. Brake assembly (10) for a rail vehicle, having a brake control device (24) according to any of Claims 1 to 7.

9. Rail vehicle having a brake assembly (10) according to Claim 8 or a brake control device (24) according to any of Claims 1 to 7.

10. Method for operating a brake control device (24) for a brake assembly (10) of a rail vehicle, the said method having the steps:
determination by the brake control device (24) of a braking force or a braking torque produced by at least one frictional braking device (14, 16; 15, 17) of the brake assembly (10) that is actuated during a braking process;
**characterised by**
storage by the brake control device (24) of wear data based on the braking force or the braking torque determined.

## Revendications

1. Dispositif (24) de commande de freinage pour un système (10) de frein d'un véhicule ferroviaire, qui est constitué de manière à déterminer pendant un freinage, la force de freinage produite ou le couple de freinage produit d'au moins un dispositif (14, 16; 15, 17) de frein à friction actionné pendant le freinage ;
**caractérisé en ce que**
le dispositif (24) de commande de frein est constitué en outre, pour mettre en mémoire dans un dispositif de mémoire, des données d'usure, qui reposent sur la force de freinage déterminée ou sur le couple de freinage déterminé.

2. Dispositif de commande de freinage suivant la revendication 1, dans lequel le dispositif (24) de commande de freinage est constitué pour déterminer, pendant un freinage, la force de freinage produite ou le couple de freinage produit de plusieurs dispositifs (14, 16; 15, 17) de frein à friction, et mettre en mémoire pour chacun des dispositifs de frein à friction, des données d'usure associées respectivement au dispositif (14, 16; 15, 17) de frein à friction correspondant.

3. Dispositif de commande de freinage suivant la revendication 1 ou 2, dans lequel le dispositif (24) de commande de freinage est constitué pour commander le système (10) de frein sur la base des données d'usure.

4. Dispositif de commande de freinage suivant la revendication 3, dans lequel le dispositif (24) de commande de freinage est constitué pour commander dissymétriquement plusieurs dispositifs (14, 16; 15, 17) de frein à friction sur la base des données d'usure.

5. Dispositif de commande de freinage suivant l'une des revendications précédentes, dans lequel le système de frein est un système (10) de frein pneumatique, qui a au moins un dispositif (14, 16; 15, 17) de frein à friction à actionnement pneumatique.

6. Dispositif de commande de freinage suivant l'une des revendications précédentes, dans lequel le dispositif (14, 16; 15, 17) de commande de frein est constitué pour émettre, sur la base des données d'usure, un signal qui contient des informations d'entretien se rapportant au au moins un dispositif (14, 16; 15, 17) de frein à friction.

7. Dispositif de commande de freinage suivant l'une des revendications précédentes, dans lequel le dispositif (24) de commande de frein est relié ou peut être relié à un dispositif (18, 19, 30, 32) de capteur, qui permet de transmettre des données au dispositif (24) de commande de freinage, sur la base desquelles le dispositif (24) de commande de freinage peut déterminer la charge.

8. Système (10) de freinage d'un véhicule ferroviaire comprenant un dispositif (24) de commande de freinage suivant l'une des revendications 1 à 7.

9. Véhicule ferroviaire ayant un système (10) de freinage suivant la revendication 8 ou un dispositif (24) de commande de freinage suivant l'une des revendications 1 à 7.

10. Procédé pour faire fonctionner un dispositif (24) de commande de freinage d'un système (10) de frein d'un véhicule ferroviaire, comprenant les stades :
détermination, par le dispositif (24) de commande de freinage, d'une force de freinage produite ou d'un couple de freinage produit d'au moins un dispositif (14, 16; 15, 17) à frein de friction actionné lors d'un freinage du système (10) de frein ;
**caractérisé par**
la mise en mémoire, par le dispositif (24) de commande de freinage, de données d'usure reposant sur la force de freinage déterminée ou sur le couple de freinage déterminé.
